# NEUE EUROPÄISCHE PATENTSCHRIFT

(11) **EP 0 243 664 B2**
(45) Veröffentlichungstag und Bekanntmachung des Hinweises auf die Entscheidung über den Einspruch: **15.06.1994**
(45) Hinweis auf die Patenterteilung: 20.09.1989
(21) Anmeldenummer: 87104164.6
(22) Anmeldetag: 20.03.1987
(51) Int. Cl.: B01D 53/34

(54) **Verfahren zur Reinigung von Rauchgas**
Process for purifying flue gas
Procédé pour purifier du gaz de fumée

(30) Priorität: 02.05.1986 DE 3614814
(43) Veröffentlichungstag der Anmeldung: 04.11.1987
(73) Patentinhaber: KERNFORSCHUNGSZENTRUM KARLSRUHE GMBH, D-76050 Karlsruhe (DE)
(72) Erfinder: Braun, Hartmut, Dr., D-7500 Karlsruhe (DE); Vogg, Hubert, Prof. Dr., D-7500 Karlsruhe (DE)

(56) Entgegenhaltungen:
- EP-A- 0 169 997
- DE-A- 3 320 466
- FR-A- 2 547 210
- GB-A- 1 268 421
- US-A- 4 152 493
- US-A- 4 305 827
- PATENT ABSTRACTS OF JAPAN, vol. 9, no. 306 (C-317)[2029], 3. Dezember 1985; & JP - A - 60 143 891 (HITACHI PLANT KENSETSU K.K.) 30.07.1985

## Beschreibung

Die Erfindung betrifft ein Verfahren zur Reinigung von Rauchgas, das bei der Verbrennung von Abfallstoffen entsteht und sowohl Feststoffe unterschiedlichster Zusammensetzung als auch Schadstoffe in Gasform enthält, bei dem die Flugasche gesammelt wird, eine Wäsche des Rauchgases zum Zwecke der Bindungen von Schadgasen sowie restlicher Feststoffanteile erfolgt, und das Kondensat dazu benutzt wird, lösliche Schwermetalle in einem Lösereaktor aus der Flugasche herauszulösen. Ein derartiges Verfahren ist aus der DE-A-33 20 466 bekannt.

Bei dem bekannten Verfahren werden die herausgelösten Schwermetalle einer Sulfid-Fällung unterworfen, um die Schwermetalle in konzentrierter Form aus dem Reinigungsprozess abzutrennen. Dieses Verfahren leidet unter dem Nachteil, daß sich das Quecksilber an die Flugasche anlagert, somit mindestens teilweise einen anderen Weg nimmt als in DE-A-3 320 466 angegeben ist.

In der Rauchgasreinigung werden die festen, flüssigen oder gasförmigen Schadstoffe aus dem Rauchgas abgeschieden mit dem Ziel, die Umweltbeeinträchtigung auf ein erträgliches Maß zu reduzieren. Prinzipiell erfolgt die Abtrennung von Schadstäuben aus den Gasen durch mechanische und elektrische Verfahren sowie bei der Naßentstaubung durch Absorption, Adsorption oder Chemisorption. Grundverfahren derSchadgasabscheidung sind die Absorption, die Adsorption, die Kondensation sowie chemische Reaktionsprozesse. Bei der Naßwäsche fallen Schlämme, Salze und Abwässer an, die in der Regel zum größten Teil nichttoxisch sind, und daher die Entsorgung als Sondermüll unnötig teuer und unwirtschaftlich gestalten.

In Rauchgasreinigungsanlagen werden häufig mehrere Grundverfahren zu einem Gesamtverfahren kombiniert. Eines der gebräuchlichsten Müllverbrennungsverfahren sieht rauchgasseitig die Abgasreinigung von Stäuben durch Elektro- oder Gewebefilter und auch die Teilentfernung der Schadgase HCI, S0₂, HF in der Abluft durch saure oder alkalische Behandlungsmethoden vor oder hinter der Filteranlage vor (Abfallwirtschaft an der TU Berlin, Bd. 7, S. 1-41). Gasförmig vorliegende Schwermetalle, z.B. Hg oder organische Schadstoffe, z. B. chlorierte Dioxine, lassen sich verläßlich bisher nur durch Naßverfahren nach den Filtern entfernen. Die sichere Entfernung der Schwermetallschadstoffe aus dem Ökosystem ist vor allem unter Langzeitaspekten ebenfalls nicht garantiert. Eine vorrangige Problematik in bezug auf die Schadstoffe Hg, Cd, Pb, Sb, Sn, Zn, u. a. in den Flugaschen bzw. im Schadgas und/oder in der Schlacke von Müllverbrennungsanlagen bleibt bestehen.

Die der Erfindung zugrundeliegende Aufgabe besteht darin, das Verfahren gemäß DE-A-3 320 466 derart zu verbessern, daß das Quecksilber möglichst spezifisch und in konzentrierter Form aus dem Prozess abgetrennt wird.

Die Lösung ist im kennzeichnenden Teil des Anspruches 1 beschrieben.

Die übrigen Ansprüche geben vorteilhafte Weiterbildungen der Erfindung wieder.

Bei dem erfindungsgemäßen Verfahren wird demnach zum Schutze der Umwelt darauf geachtet, daß sowohl die gasförmigen Schadstoffe wie HCI, S0₂, NO_{X} wie auch der Flugstaub sowie die gasförmig anfallenden Metalle, insbesondere Quecksilber, und die in den Flugstäuben der Verbrennunganlage auftretenden löslichen Schwermetallschadstoffe eliminiert werden, derart, daß nur immobile Anteile verbleiben; diese können mit der Verbrennungschlacke so vereinigt werden, daß eine Langzeitimmobilität und damit eine unbedenkliche Wiederverwendung bzw. Entsorgung gesichert ist. Das erfindungsgemäße Verfahren verwendet zwar ebenfalls naßchemische Rauchgasreinigungsprozesse, die aber so gestaltet sind, das sie die Forderungen nach Reinigung der eigentlichen Gasphase, dem Löseangriff an den Flugaschen und der Reinhaltung der Asche erfüllen. Zur selektiven Abtrennung des Schwermetalls Quecksilber wird erfindungsgemäß das Kondensat aus der Kondensations/Waschanlage einem Anionaustauschprozess unterworfen, bevor es mit der Flugasche in dem Lösereaktor zusammengeführt wird. Da Quecksilber und zum Teil auch Cadmium leicht Chloridkomplexe bilden und als solche im Rauchgaswaschwasser (RGWW) vorliegen, sind z. B. stark basische Anionenaustascher wirksam für die Abtrennung einsetzbar. Für Zink und auch für Cadmium werden dann Selektiv-Kationenaustascher eingesetzt. Als Güte für die Abtrennung wird dabei der Grenzwert für die Einleitung in einen Vorfluter von 0,05 mg Hg/1 bzw. 0.1 mg Cd/1 beachtet.

Die Erfindung wird im folgenden anhand einer Figur mittels eines Ausführungsbeispiels näher erläutert.

Gemäß der schematischen Figur wird der Müll 1 in die Verbrennungsanlage 2 gegeben und verbrannt. Hierbei entsteht Wärme mit dem Rauchgas und Schlacke 3. Ein Teil der Wärme wird aus dem Rauchgas in einer Wärmetauscheranlage 4 abgezogen und anderweitig verwendet. Die Rauchgase werden nach dieser Wärmegewinnung wahlweise einer trockenen Vorreinigung mittels eines Zyklons oder eines Elektrofilters 5 bei ca. 180 °C unterzogen, wobei, wie schon bei der Wärmegewinnung, darauf zu achten ist, daß keine Taupunktunterschreitung für ein Gas, Wasserdampf oder dergleichen erfolgt.

An die Trockenreinigung 5 schließt sich für die durch die Filter oder das Zyklon hindurchgetretenen Gase und Dämpfe ein Kondensations/Waschprozeß 6 an, bei dem der Wasserdampf bei gleichzeitiger Abreinigung von HCI und Hg anfällt. Das verbleibende Restrauchgas mit den Schadgaskomponenten S0₂, NO_{X} wird anschließend einer alkalischen Wäsche 7 unterzogen und das Reingas dem Kamin 8 zugeführt.

Erfindungsgemäß ist nun vorgesehen, daß das Kondensat aus der Kondensations/Waschanlage 6 einer ersten Extraktion 28 zwecks Enfernung vorzugsweise des Hg unterzogen wird. Dies geschieht mit dem Anionenaustauscher, z.B. Lewatit OC 1014 der Firma Bayer, in hervorragender Weise. Die Kapazität dieses nichtregenerierbaren Harzes wurde mit etwa 200 g Hg/I Harz bestimmt. Bei einer Quecksilberkonzentration im Rauchgaswaschvorrat bzw. Kondensat von etwa 5 mg/I können also mit 1 I Harz 40 m³ RGWW bis auf den Einleitungsgrenzwert gereinigt werden. Die Abtrennung erfolgt vor der Extraktion 10 der Flugstäube 9, da sich Quecksilber sonst an diese anlagert.

Das somit von Hg befreite Waschkondensat des Kondensations- bzw. Extraktionsprozesses 6 bzw. 28 wird zum teilweisen Lösen der Schwermetalle aus der Flugasche 9 mit dieser Flugasche 9 in dem Lösereaktor 10 zusammengeführt. Hier kann ein mechanischer Vermischungsvorgang vorgesehen sein; das saure Waschkondensat (HCI-haltig) reagiert mit der alkalischen Flugasche, wobei ein End-pH von ca. 3 eingestellt wird.

Diesem Lösereaktor 10 schließt sich eine Fest-Flüssig-Trennung (z.B. Sedimentation oder Zentrifuge) an. Es resultiert ein fester Rückstand 11 und eine Lösung 12, die sich im wesentlichen aus einem von Hg- (bzw. Hg, Cd, Zn-) befreiten Waschkondensat und den aus der Flugasche 9 entfernten Schwermetallen zusammensetzt. Der feste Rückstand 11 wird in vorteilhafter Weise der Verbrennungsanlage 2 wiederzugeführt, damit eine Hochtemperatureinbindung in die Schlacke 3 stattfindet.

Erfindungsgemäß ist weiterhin vorgesehen, daß entweder unmittelbar nach der Extraktion 10 der Flugstäube 9 und vor der Fest-Flüssig-Trennung 11/12 oder direkt in der Lösung 12 vor der eigentlichen Schwermetallfällung 13 eine weitere Extraktion 29 bzw. 29' mittels eines Kationenaustauschers zwecks Eliminierung vorzugsweise des Cd und/oder Zn erfolgt. Hierzu eignet sich ein Selektivaustauscher, z.B. Lewatit TP 207 der Firma Bayer, ohne daß die in großen Mengen vorliegenden Calciumsalze mit entfernt werden.

Die von Hg, Cd und/oder Zn befreite saure Lösung 12 wird anschließend der Schwermetallfällung 13, vorzugsweise einer Sulfidfällung, unterzogen. Nach erneuter Fest-Flüssig-Trennung resultieren in kompakter Form 14 die Schwermetalle, die für ein eventuelles Recycling 16 zur Verfügung stehen, sowie eine immer noch saure Lösung 15, die mit der alkalischen Wäsche 7 zwecks Neutralisation (Neutralisationsanlage 17) vereinigt wird.

Der bei der Neutralisation 17 gebildete Klärschlamm 18 wird vorzugsweise ebenfalls wieder der Verbrennungsanlage 2 zugeführt und dort durch Hochtemperatur in die Schlacke 3 eingebunden oder als Lösung 19 einem Vorfluter 20 zugeführt.

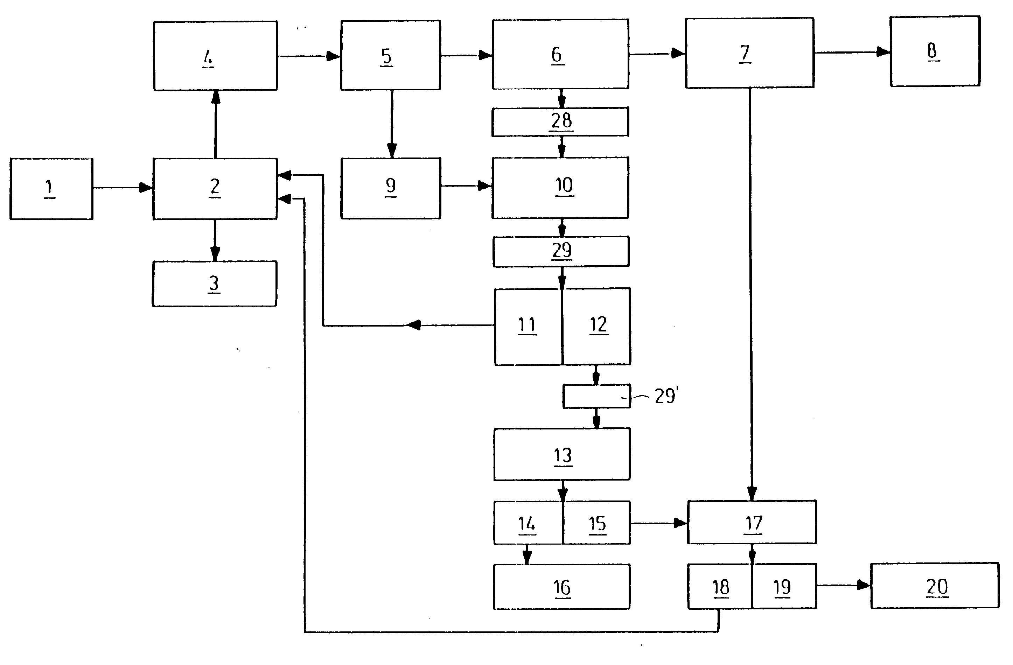

## Patentansprüche

1. Verfahren zur Reinigung von Rauchgas, das bei der Verbrennung von Abfallstoffen entsteht und sowohl Feststoffe unterschiedlichster Zusammensetzung als auch Schadstoffe in Gasform enthält, bei dem die Flugasche gesammelt wird, eine Wäsche des Rauchgases zum Zwecke der Bindung von Schadgasen sowie restlicher Feststoffanteile erfolgt, und das Kondensat dazu benutztwird, lösliche Schwermetalle in einem Lösereaktor aus der Flugasche herauszulösen, dadurch gekennzeichnet, daß das Kondensat aus der Kondensations/Waschanlage (6) einem Anionenaustauschprozeß (28) zurAbscheidung von Hg unterworfen wird, bevor es mit der Flugasche (9) in dem Lösereaktor (10) zusammengeführt wird.

2. Verfahren nach Anspruch 1, dadurch gekennzeichnet, daß ein weiterer Trennprozeß (29, 29') an der den Lösereaktor (10) verlassenden Lösung vor oder nach der Fest-Flüssig-Trennung (11, 12) zwecks Abscheidung von Inhaltsstoffen vorzugsweise von Cd und/oder Zn erfolgt.

3. Verfahren nach Anspruch 1 oder 2, dadurch gekennzeichnet, daß ein Kationenaustauschprozeß (29, 29') an der Lösung durchgeführt wird.

## Claims

1. Process for purifying flue gas, which is produced during the combustion of waste materials and contains both solids of the most different compositions and pollutants in gaseous form, with the fly ash collected, the flue gas washed forthe purpose of fixing noxious gases, the residual solid constituents washed, and the condensate used to remove soluble heavy metals from the flue ash in a dissolving reactor, characterised by the condensate from the condensing and washing system (6) being subjected to an anion exchange process (28) to separate Hg before the condensate is combined with the fly ash (9) in the dissolving reactor (10).

2. Process according to claim 1, characterised by an additional separation process (29, 29') carried out on the solution leaving the dissolving reactor (10) before or after the solid/liquid separation (11, 12) for the elimination of constituents, preferably Cd and/or Zn.

3. Process according to claim 1 or 2, characterised by a cation exchange process (29, 29') carried out on the solution.

## Revendications

1. Procédé de purification du gaz de fumée qui se forme au cours de la combustion de substances de déchets et contient des substances solides de compositions les plus diverses aussi bien que des substances nocives sous forme gazeuse, d'apres lequel les cendres volantes sont ramassées, le gaz de fumée est lavé afin de fixer les gaz nocifs ainsi que les quantités résiduelles de substances solides et le condensat est utilisé pour séparer par dissolution les métaux lourds solubles dans un réacteur de dissolution des cendres volantes, caractérisé en ce que le condensat provenant de l'installation de condensationllava- ge (6) est soumis à un processus d'échange d'anions (28) pour séparer le mercure avant que le condensat soit réuni avec les cendres volantes (9) dans le réacteur de dissolution (10).

2. Procédé selon la revendication 1, caractérisé en ce qu'un processus supplémentaire de séparation (29, 29') est effectué sur la solution (10) avant ou après la séparation solide/liquide (11, 12) dans le but de séparer des constituants, de préférence le Cd et/ou le Zn.

3. Procédé selon la revendication 1 ou 2, caractérisé en ce qu'un processus d'échange de cations (29, 29') est effectué sur la solution.
